# EUROPEAN PATENT SPECIFICATION

(11) **EP 2 578 812 B1**
(45) Date of publication and mention of the grant of the patent: **04.06.2014**
(21) Application number: 11789812.2
(22) Date of filing: 31.05.2011
(51) Int. Cl.: F01D 17/10, F01D 17/18

(54) **STEAM VALVE**
DAMPFVENTIL
SOUPAPE DE VAPEUR

(30) Priority: 02.06.2010 JP 2010126845
(43) Date of publication of application: 10.04.2013
(73) Proprietor: Mitsubishi Heavy Industries, Ltd., Tokyo 108-8215 (JP)
(72) Inventor: NISHIMURA, Toshinari, Tokyo 108-8215 (JP)
(74) Representative: Intès, Didier Gérard André
(86) International application number: PCT/JP2011/062510
(87) International publication number: WO 2011/152409

(56) References cited:
- JP-A- 8 320 074
- JP-A- 10 299 909
- JP-A- 61 248 968
- JP-A- 62 209 275
- JP-A- 2006 063 957
- JP-U- H0 287 178

## Description

### Technical Field

The present invention relates to a steam valve for regulating the flow of steam supplied to a steam turbine for power generating facilities such as thermal power plants and nuclear power plants.

### Background Art

A steam turbine for thermal power plants, nuclear power plants or the like is provided with a plurality of steam valves for regulating the flow of steam according to load changes, or cutting off the supply of steam in response to emergency. Normally, a steam valve changes a flow passage area between a valve seat and a valve body by moving a valve rod by means of an actuator, thereby regulating the flow of steam.

Such steam valve deals with high-pressure steam flowing therein. This causes steam to drift or swirl and such steam turbulence results in noise, vibration, erosion and accidents such as cracks in a valve body and a connecting part of a valve rod supporting the valve body. Particularly, a steam control valve arranged on an upstream side of a high-pressure chamber of the steam turbine and an intercept valve arranged on an upstream side of a medium-pressure chamber deal with a large amount of high-pressure steam flow.

When steam flowing through a steam path defined by the valve seat and the valve body enters a transonic state, unsteady shock waves accompanied by large pressure fluctuations causing vibration to the valve body and the like were generated in steam flowing through the steam path. Therefore, there have been attempts to modify a shape of the valve body and the valve seat so as to reduce the vibration to the valve body and the like of the steam valve.

For instance, in Patent Literatures 1 and 2, disclosed is a steam valve having a curvature radius of the valve body is set to 0.52 to 0.6 of a valve seat diameter, and a curvature radius of the valve seat is set to 0.6 or greater of the valve seat diameter.

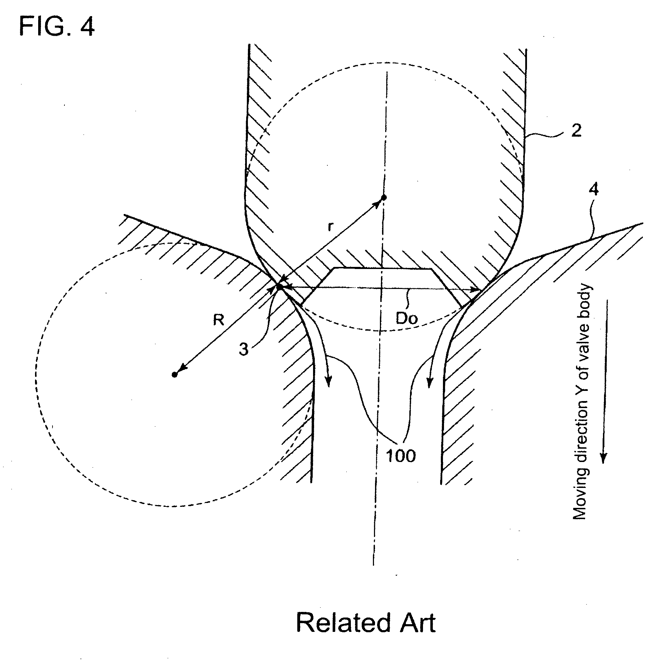

FIG. 4 is a schematic cross-sectional view of the steam valve described in Patent Literatures 1 and 2. As shown in FIG. 4, the curvature radius of the valve body 2, r is set to 0.52 to 0.6 of the seat diameter, D₀ and the curvature radius of the valve seat 4, R is set greater than 0.6 of the seat diameter, D₀. Therefore, a steam line 100 of the steam, when the steam valve is opened slightly, is formed comparatively along a moving direction of the valve body, i.e. the flow line 100 being vertical. This generates an annular flow adhering to a side of the valve seat 4, making a steam flow steady and reducing the vibrations in parts of the steam valve.

### Citation List

### Patent Literature

PTL 1
   Japanese Patent Publication No. SHO 58-44909 B2
PTL 2
   Japanese Patent Publication No. 4185029 B

### Summary of Invention

### Technical Problem

However, in the steam valve described in Patent Literatures 1 and 2, a tangential direction of the valve seat 4 is comparatively standing (comparatively adhering to the moving direction Y of the valve body 2) at a seating position 3 where the valve seat 4 and the valve body come in contact with each other. Thus, the flow passage area between the valve seat 4 and the valve body 2 is small and pressure loss is large. To ensure enough supply of steam, it is necessary to increase a lift amount of the valve body 2 or to make the steam valve itself bigger. It is required to prevent damages to the steam turbine by cutting off the steam supply to the steam turbine immediately in emergency situations. However, by increasing the lift amount of the valve body 2, it takes longer to change from a full-open position to a full-closed position. Thus, it is difficult to cut off the steam supply rapidly. Meanwhile, by making the steam valve itself bigger, this leads to restrictions on installation of the steam valve and to significant cost rise.

In view of the issues above, it is an object of the present invention to provide a steam valve, which can reduce vibrations of each part of the steam valve, can suppress pressure loss and can cut off the steam rapidly.

In one aspect, a steam valve may include, but is not limited to:
a valve seat; and
a valve body which moves relative to the valve seat so as to change an area of a flow path between the valve seat and the valve body and regulate a flow of a steam passing through the flow path,
wherein the valve body may include, but is not limited to:
a valve head portion which comes in contact with the valve seat and satisfies a relationship of r>0.6D₀, where r is a curvature radius of the valve head portion and D₀ is a seat diameter of the valve seat; and according to the invention
a tapered portion which is arranged on an upstream side of the valve head portion and whose surface is tilted toward a direction of relative movement of the valve body to the valve seat more than that of the valve head portion.

Hereinafter, the state where a line of steam flow, a tangential line of the valve seat, a surface of the tapered portion or the like is comparatively along the direction of the relative movement of the valve body to the valve seat, is described as "standing", whereas the state where the line of steam flow, the tangential line of the valve seat, the surface of the tapered portion or the like is comparatively along a direction perpendicular to the direction of the relative movement of the valve body to the valve seat, is described as "lying". The tangential line (direction) of the valve seat at the seating position is determined by a ratio of the curvature radius r of the valve head portion of the valve body to the seat diameter D₀ of the valve seat according to geometric relationship.

In the steam valve in relation to the present invention, the valve head portion of the valve body satisfies a relationship of r>0.6D₀ where r is the curvature radius of the valve head portion and D₀ is the seat diameter of the valve seat. Thus, the tangential line of the valve seat at the seating position is lying more than that of the conventional case, resulting in a larger area of the flow path between the valve seat and the valve body for the same lift amount and small pressure loss. This achieves that the lift amount of the valve body to ensure a supply amount of steam is small and supply of steam to the steam turbine or the like can be cut off immediately.

In the steam valve, the tapered portion is arranged on an upstream side of the valve head portion. The surface of the tapered portion is tilted toward a direction of relative movement of the valve body more than that of the valve head portion. By providing the tapered portion, steam is guided into the direction of the relative movement before passing through the flow path between the valve seat and the valve body. Thus, although the curvature radius r of the valve head portion and the seat diameter D₀ have the relationship of r>0.6D₀ and the tangential line of the valve seat at the seating position is comparatively lying, it is possible to achieve, by the tapered portion, a state where the steam line between the valve body and the valve seat is standing. Therefore, the steam flow forms an annular flow adhering to the valve seat side, thereby reducing vibration to each part of the steam valve.

specifically, in the steam valve of the present invention, a ratio of the curvature radius r of the valve head portion to the seat diameter D₀ is set greater than that of the conventional case and the tangential line of the valve seat is lying more than that of the conventional case so as to reduce pressure loss, and the tapered portion is provided on the upstream side of the valve head portion so as to sufficiently reduce the virtual curvature radius including the valve head portion and the tapered portion with respect to the seat diameter and the curvature radius of the valve seat. Therefore, it is possible to reduce vibration in each part of the steam valve by achieving the state where the line of steam flow between the valve seat and the valve body is standing and adhering the steam flow to the valve seat side.

In the above steam valve, it is preferable that the valve head portion satisfies a relationship of 0.61D₀ ≦ r ≦ 0.80 D₀.

In this manner, the curvature radius r of the valve head portion is set not less than 0.61 and thus, it is possible to cut off the supply of steam immediately. When the curvature radius r of the valve head portion is set not greater than 0.80, it becomes easy for the steam flow to form annular flow adhering to the valve seat side, thereby firmly reducing vibration in each part of the steam valve.

In the above steam valve, it is preferable that the surface of the tapered portion forms an angle of θ₀ with respect to a tangential line of the valve seat extending from a seating position toward a downstream side, the angle, θ₀ being not less than 150° and not greater than 170°.

When the angle of θ₀ formed by the surface of the tapered portion with respect to the tangential line of the valve seat is too small, a transition area where a profile of the valve body transits, on the upstream side of the seating position, from the tapered portion to the valve head portion has a sharp corner, causing a separation of the steam flow near the corner. This causes more vibration in each part of the steam valve. On the other hand, when the angle of θ₀ is too large, it is difficult to sufficiently control steam by the tapered portion such that the flow line of steam is standing.

Thus, the angle, θ₀ is set to not less than 150° and not greater than 170° so as to prevent separation of the steam flow in the transition area where the profile of the valve body transits from the tapered portion to the valve head portion, and further to firmly guide the steam flow by the tapered portion so that the line of steam flow is standing.

In the above steam valve, it is preferable that the tapered portion satisfies a relationship of 0.3 ≦ θ/ (90-δ) ≦ 0.4 where θ is an angle formed by the surface of the tapered portion with respect to the direction of relative movement of the valve body to the valve seat and δ is an angle formed by a tangential line of the valve seat at a seating position with respect to the direction of the relative movement of the valve body to the valve seat.

Herein, θ / (90-δ) is proportional to the angle θ formed by the surface of the tapered portion with respect to the direction of the relative movement of the valve body, and is inversely proportional to an angle of the tangential line of the valve seat at the seating position, (90-δ) that is a standing angle. Therefore, when θ / (90-δ) is small, the surface of the tapered portion is standing and/or the tangential line is standing.

In this manner, by setting θ / (90-δ) to 0.4 and below, the line of steam flow is caused to stand by the tapered portion or the tangential line of the valve seat at the seating position is caused to stand, thereby forming an annular flow adhering to the valve seat side. By setting θ / (90-δ) to 0.3 and above, it is possible to prevent separation of the steam flow at the transition area caused by the tapered portion being excessively standing. In the present invention, the valve head portion satisfies the relationship of r>0.6D₀, where r is the curvature radius of the valve head portion and D₀ is a seat diameter of the valve seat. Thus, it is not necessary to consider the case where the tangential line of the valve seat is excessively standing at the seating position.

In the above steam valve, it is preferable that the valve head portion of the valve body has a circular recess formed at a tip of the valve body on a downstream side of a seating position where the valve head portion comes in contact with the valve seat, and that the circular recess satisfies a relationship of 0.90D₀ ≦ Dn ≦ 0.98D₀ where Dn is a diameter of the circular recess and D₀ is a seat diameter of the valve seat.

In this manner, by setting the diameter Dn of the circular recess to 0.90D₀ or above and providing the circular recess on the immediate downstream side of the seating position, it is possible to prevent vibration in the valve body under the influence of a shock wave when the steam flow gets into a transonic condition. Furthermore, by setting the diameter Dn of the circular recess to 0.98D₀ or below, it is possible to prevent mechanical breakage of the valve body or the valve seat caused when an edge of the circular recess is pressed against the valve seat at the full-closed position of the steam valve.

In the above steam valve it is preferable that the valve body further includes a base part which is arranged on an upstream side of the tapered portion and is formed cylindrically and that the base part satisfies a relationship of 1.03D₀ ≦ Dv ≦ 1.10D₀ where Dv is a diameter of the base part of the valve body and D₀ is a seat diameter of the valve seat.

In this manner, by setting the diameter Dv of the base part of the valve body to 1.03D₀ ≦ Dv, the tapered portion is formed over a comparatively broad area and it is possible to positively realize an annular flow of the steam flow adhering to the valve side. Further, by setting the diameter Dv of the base part of the valve body to Dv ≦ 1.10D₀ the outer diameter of the valve body can have an adequate size while preventing the steam valve from being large. It is also possible to prevent separation of steam flow caused when the steam flow guided at the tapered portion changes its direction at the transition area where the profile of the valve body transits from the tapered portion to the valve head portion.

### Advantageous Effects of Invention

According to the present invention, the valve head portion of the valve body satisfies the relationship of r>0.6D₀ where r is the curvature radius of the valve head portion and D₀ is the seat diameter of the valve seat. Thus, the area of the flow path between the valve seat and the valve body is large and the pressure loss is small. This reduces the lift amount of the valve body to ensure a supply amount of steam. As a result, it is possible to immediately cut off supply of steam to the steam turbine or the like.

Further, according to the present invention, the tapered portion is arranged on the upstream side of the valve head portion. The surface of the tapered portion is tilted toward the direction of the relative movement of the valve body more than that of the valve head portion. By providing the tapered portion, steam is guided into the direction of the relative movement before passing through the flow path between the valve seat and the valve body. Thus, it is possible to achieve, by the tapered portion, a state where the steam line between the valve body and the valve seat is standing. Therefore, the steam flow forms an annular flow adhering to the valve seat side, thereby reducing vibration to each part of the steam valve.

### Brief Description of Drawings

[FIG.1] FIG.1 is a cross-sectional view of an exemplary structure of a steam valve in relation to a preferred embodiment.
[FIG.2] FIG.2 is an enlarged cross-sectional view illustrating shapes of a valve body and a valve seat around a seating portion.
[FIG.3] FIG.3 is a cross-sectional view showing a virtual curvature radius of a tapered portion and a valve head portion.
[FIG.4] FIG.4 is a cross-sectional view showing schematically a conventional steam valve.

### Description of Embodiments

A preferred embodiment of the present invention will now be described in detail with reference to the accompanying drawings. It is intended, however, that unless particularly specified, dimensions, materials, shape, its relative positions and the like shall be interpreted as illustrative only and not limitative of the scope of the present invention.

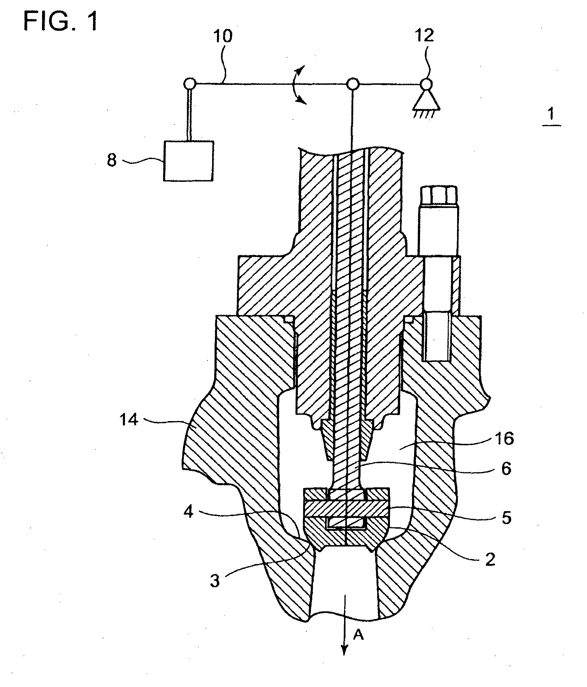

A general structure of a steam valve in relation to the present invention is explained hereafter. FIG.1 is a cross-sectional view of an exemplary structure of a steam valve in relation to a preferred embodiment.

FIG.1 shows a steam valve 1. The steam valve 1 is mainly constituted of a valve body 2, a valve seat 4, a valve shaft 6 and an actuator 8.

The valve body 2 is secured to the valve shaft 6 by means of a pin 5. The valve body 2 moves in a vertical direction with the valve shaft 6 by moving a lever 10 in a direction of an arrow around a supporting point 12 by means of the actuator 8. Thus, a position of the valve body 2 with respect to the valve seat 4 can be adequately adjusted depending on an amount of steam to be supplied, between a full-closed position where the valve body 2 is in contact with the valve seat 4 at a seating position 3 and a full-open position where the valve body 2 is off from the valve seat 4 by a maximum lift amount.

The steam introduced to the steam valve 1 flows from a valve chamber 16 surrounded by a casing 14 of the steam valve 1 through an annular passage formed between the valve body 2 and the valve seat 4 and flows out in a direction of an arrow A to be supplied to a steam turbine or the like (not shown) that is arranged on a downstream side of the steam valve 1.

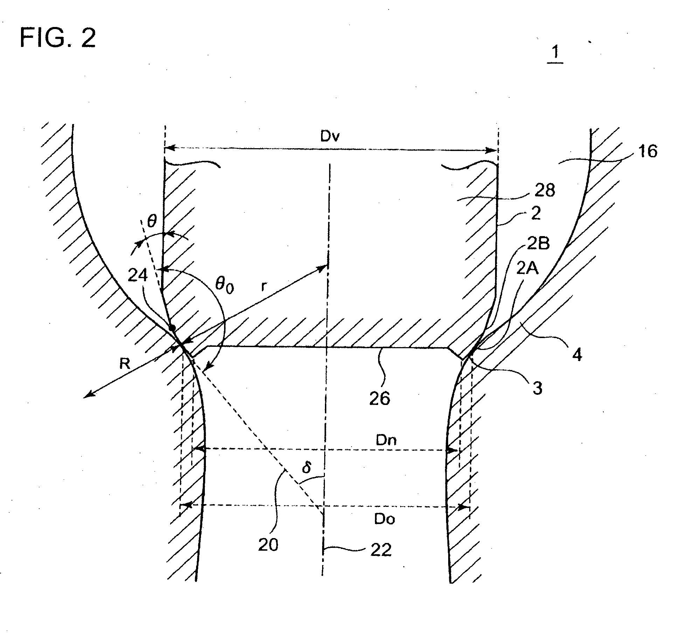

Next, configurations of the valve body 2 and the valve seat 4 of the steam valve in relation to the preferred embodiment is described. FIG.2 is an enlarged cross-sectional view illustrating shapes of the valve body 2 and the valve seat 4 around a seating portion. FIG.2 shows the valve body 2 having a valve head portion 2A and a tapered portion 2B. The valve head portion 2A has a curvature radius r and comes in contact with the valve seat 4 at the seating position 3. The tapered portion 2B is arranged on an upstream side of the valve head portion 2A.

The valve head portion 2A satisfies a relationship of r>0.6D₀, where r is the curvature radius of the valve head portion 2A and D₀ is a seat diameter (diameter of the seating position 3) of the valve seat 4. Thus, a tangential line 20 of the valve seat 4 at the seating position 3 is lying flatter than that of the conventional case. This creates a larger area of a flow path between the valve body and the valve seat 4 and pressure loss is comparatively small. This achieves that the lift amount of the valve body to ensure a supply amount of steam is small and supply of steam to the steam turbine or the like (not shown) can be cut off immediately.

Further, when the curvature radius r of the valve head portion 2A is set to r>0.6D₀, the curvature radius R of the valve seat 4 may be set to 0.20D₀ ≦ R ≦ 0.50D₀ for instance.

The tapered portion 2B is arranged on an upstream side of the valve head portion 2A. The surface of the tapered portion 2B is tilted toward a direction of relative movement of the valve body 2 more than that of the valve head portion 2A. The tapered portion 2B may be formed, for instance, by chamfering only an upstream side of the valve head portion 2A having the curvature radius r. By providing the tapered portion 2B, steam introduced to the valve chamber 16 is guided into the direction of the relative movement 22 before passing the seating position 3. Thus, it is possible to achieve by the tapered portion 2B a state where a steam line between the valve body 2 and the valve seat 4 is standing, although the curvature radius r of the valve head portion 2A and the seat diameter D₀ have the relationship of r>0.6D₀ and the tangential line 20 of the valve seat 4 at the seating position 3 is comparatively lying. Therefore, the steam flow forms an annular flow adhering to the valve seat side, thereby reducing vibration in each part of the steam valve 1.

Further, it is preferable in the steam valve 1 shown in FIG.2 that the valve head portion 2A satisfies a relationship of 0.61D₀ ≦ r ≦ 0.80 D₀ where r is a curvature radius and D₀ is a seat diameter.

In this manner, the curvature radius r of the valve head portion 2A is set not less than 0.61 and thus, it is possible to cut off the supply of steam immediately. When the curvature radius r of the valve head portion 2A is set not greater than 0.80, it becomes easy for the steam flow to form annular flow adhering to the valve seat side, thereby firmly reducing vibration in each part of the steam valve 1.

An angle θ₀ formed by the surface of the tapered portion 2B with respect to the tangential line 20 of the valve seat 4 extending from the seating position 3 toward a downstream side, is preferably not less than 150° and not greater than 170°.

When the angle of θ₀ formed by the surface of the tapered portion 2B with respect to the tangential line 20 of the valve seat 4 is too small, a transition area 24 where a profile of the valve body 2 transits on the upstream side of the seating position 3 from the tapered portion 2B to the valve head portion 2A has a sharp corner, causing a separation of the steam flow near the corner. This causes more vibration in each part of the steam valve 1. On the other hand, when the angle of θ₀ is too large, it is difficult to sufficiently control steam by the tapered portion 2B such that the flow line of steam is standing.

Thus, the angle, θ₀ is set to not less than 150° and not greater than 170° so as to prevent separation of the steam flow in the transition area 24 where the profile of the valve body 2 transits from the tapered portion 2B to the valve head portion 2A, and further to firmly guide the steam flow by the tapered portion 2B so that the line of steam flow is standing.

The tapered portion 2B preferably satisfies a relationship of 0.3 ≦ θ / (90-δ) ≦ 0.4 where θ is an angle formed by the surface of the tapered portion 2B with respect to the direction of relative movement 22 of the valve body 2 to the valve seat 4 and δ is an angle formed by the tangential line 20 of the valve seat at the seating position 3 with respect to the direction of the relative movement 22 of the valve body 2 to the valve seat 4.

Herein, θ / (90-δ) is proportional to the angle θ formed by the surface of the tapered portion 2B with respect to the direction of the relative movement 22 of the valve body 2, and is inversely proportional to an angle of the tangential line 20 of the valve seat 4 at the seating position 3, (90-δ) that is a standing angle. Therefore, when θ / (90-δ) is small, the surface of the tapered portion is standing and/or the tangential line 20 is standing.

In this manner, by setting θ / (90-δ) to 0.4 and below, the line of steam flow is caused to stand by the tapered portion 2B or the tangential line 20 of the valve seat 4 at the seating position 3 is caused to stand, thereby forming an annular flow adhering to the valve seat side. By setting θ / (90-δ) to 0.3 and above, it is possible to prevent separation of the steam flow at the transition area 24 caused by the tapered portion being excessively standing. In the preferred embodiment, the valve head portion 2A satisfies the relationship of r>0.6D₀, where r is the curvature radius of the valve head portion 2A and D₀ is a seat diameter of the valve seat 4. Thus, it is not necessary to consider the case where the tangential line 20 of the valve seat 4 is excessively standing at the seating position 3.

The valve head portion 2A of the valve body 1 has a circular recess 26 formed at a tip of the valve body 1 on a downstream side of the seating position 3 where the valve head portion 2A comes in contact with the valve seat 4. The circular recess 26 preferably satisfies a relationship of 0.90D₀ ≦ Dn ≦ 0.98D₀ where Dn is a diameter of the circular recess 26 and D₀ is a seat diameter of the valve seat 4.

In this manner, the diameter Dn of the circular recess 26 is set to 0.90D₀ or above and the circular recess 26 is provided on the immediate downstream side of the seating position 3. Thus, it is possible to prevent vibration in the valve body 2 under the influence of a shock wave when the steam flow gets into a transonic condition. By setting the diameter Dn of the circular recess 26 to 0.98D₀ or below, it is possible to prevent mechanical breakage of the valve body 2 or the valve seat 4 caused when an edge of the circular recess 26 is pressed against the valve seat at the full-closed position of the steam valve 1.

The valve body 2 has a base part 28 arranged on an upstream side of the tapered portion. The base part 28 is formed cylindrically and preferably satisfies a relationship of 1.03D₀ ≦Dv ≦1.10D₀ where Dv is a diameter of the base part 28 of the valve body 2 and D₀ is a seat diameter of the valve seat 4.

In this manner, by setting the diameter Dv of the base part 28 of the valve body 2 to 1.03D₀ ≦Dv, the tapered portion is formed over a comparatively broad area and it is possible to positively realize an annular flow of the steam flow adhering to the valve side. Further, by setting the diameter Dv of the base part 28 of the valve body 2 to Dv 1.10D₀, the outer diameter of the valve body 2 can have an adequate size while preventing the steam valve 1 from being large. It is also possible to prevent separation of steam flow caused when the steam flow guided at the tapered portion 2B, changes its direction at the transition area 24 where the profile of the valve body 2 transits from the tapered portion 2B to the valve head portion 2A.

As described above, in the steam valve 1 in relation to the preferred embodiment, the valve head portion 2A satisfies the relationship of r>0.6D₀, where r is the curvature radius of the valve head portion 2A and D₀ is a seat diameter of the valve seat 4. The valve body 2 has the tapered portion 2B arranged on an upstream side of the valve head portion 2A. The surface of the tapered portion 2B is tilted toward a direction of relative movement of the valve body 2 more than that of the valve head portion 2A.

Specifically, in the preferred embodiment, a ratio of the curvature radius r of the valve head portion 2A to the seat diameter D₀ is set greater than that of the conventional case and the tangential line 20 of the valve seat 4 is lying flatter than that of the conventional case so as to reduce pressure loss, and the tapered portion 2B is provided on the upstream side of the valve head portion 2A so as to sufficiently reduce the virtual curvature radius including the valve head portion 2A and the tapered portion 2B with respect to the seat diameter D₀ and the curvature radius R of the valve seat 4. Therefore, it is possible to reduce vibration in each part of the steam valve 1 by achieving the state where the line of steam flow between the valve seat 4 and the valve body 2 is standing and adhering the steam flow to the valve seat side.

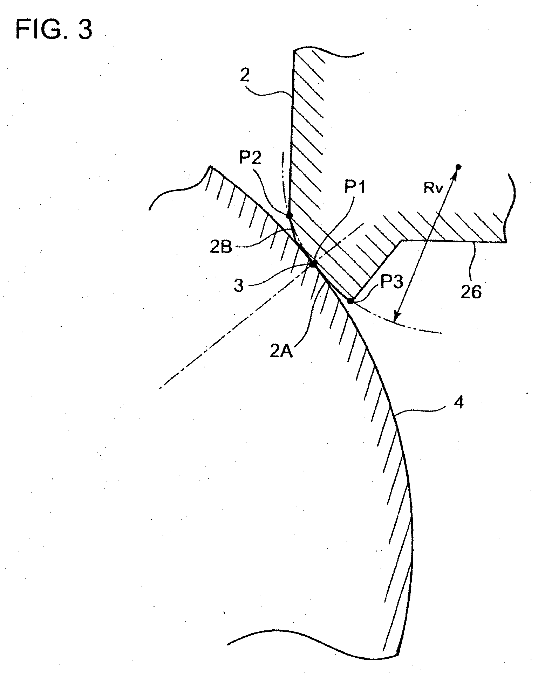

As shown in FIG.3, the virtual curvature radius including the valve head portion 2A and the tapered portion 2B is a curvature radius Rv of a virtual circle passing through points P1 to P3. P1 is a point on the valve head portion 2A which corresponds to the seating position 3. P2 is a point on the most upstream side of the tapered portion 2B. P3 is a point at an end on the downstream side of a curved surface of the valve head portion 2A. The curvature radius Rv is practically determined by setting parameters such as r, D₀, θ₀ and θ / (90-δ). However, the curvature radius Rv preferably satisfies a relationship of 0.10D₀ ≦ Rv ≦ 0.45D₀ where D₀ is a seat diameter of the valve seat 4 and a relationship of 0.2R ≦ Rv ≦ 0.9R where R is a curvature radius of the valve seat 4. In this manner, the curvature radius Rv of the virtual circle is set smaller than the curvature radius R so as to realize a steady steam flow adhering to the valve seat.

While the present invention has been described with reference to exemplary embodiments, it is obvious to those skilled in the art that various changes may be made without departing from the scope of the invention.

For instance, in the above preferred embodiment, the steam valve 1 has the general structure illustrated in FIG.1. However, this is not limitative and the steam valve 1 may be chosen from a variety of structures as long as the valve head portion 2A satisfies the relationship of r>0.6D₀ where r is the curvature radius D₀ is the seat diameter and the surface of the tapered portion 2B that is tilted toward the direction of the relative movement more than that of the valve head portion 2A is arranged on the upstream side of the valve head portion 2A. For instance, the steam valve 1 may be configured such that a tip of the valve shaft 6 functions as a sub valve that is housed in the valve body 2 (main valve) and after the sub valve opens first, the valve body 2 as the main valve opens.

## Claims

1. A steam valve comprising:
a valve seat (4); and
a valve body (2) which moves relative to the valve seat (4) so as to change an area of a flow path between the valve seat (4) and the valve body (2) and regulate a flow of a steam passing through the flow path,
wherein the valve body comprises:
a valve head portion (2A) which comes in contact with the valve seat (4) and satisfies a relationship of r>0.6D₀, where r is a curvature radius of the valve head portion (2A) and D₀ is a seat diameter of the valve seat (4) ; **characterized in that** the valve further comprises:
a tapered portion (2B) which is arranged on an upstream side of the valve head portion (2A) and whose surface is tilted toward a direction of relative movement of the valve body (2) to the valve seat (4) more than that of the valve head portion (2A).

2. The steam valve according to claim 1,
wherein the valve head portion (2A) satisfies a relationship of 0.61D₀ ≦ r ≦ 0.80 D₀.

3. The steam valve according to claim 1 or 2,
wherein the surface of the tapered portion (2B) forms an angle of θ₀ with respect to a tangential line (20) of the valve seat (4) extending from a seating position (3) toward a downstream side, the angle, θ₀ being not less than 150° and not greater than 170°.

4. The steam valve according to any one of claims 1 to 3,
wherein the tapered portion (2B) satisfies a relationship of 0.3 ≦ θ / (90-δ) ≦ 0.4 where θ is an angle formed by the surface of the tapered portion (2B) with respect to the direction of relative movement of the valve body (2) to the valve seat (4) and δ is an angle formed by a tangential line (20) of the valve seat (4) at a seating position (3) with respect to the direction of the relative movement of the valve body (2) to the valve seat (4).

5. The steam valve according to any one of claims 1 to 4,
wherein the valve head portion (2A) of the valve body (2) has a circular recess (26) formed at a tip of the valve body (2) on a downstream side of a seating position (3) where the valve head portion (2A) comes in contact with the valve seat (4), and
wherein the circular recess (26) satisfies a relationship of 0.90D₀ ≦ Dn ≦ 0.98D₀ where Dn is a diameter of the circular recess (26) and D₀ is a seat diameter of the valve seat (4).

6. The steam valve according to any one of claims 1 to 5,
wherein the valve body (2) further comprises:
a base part (28) which is arranged on an upstream side of the tapered portion (2B) and is formed cylindrically, and
wherein the base part (28) satisfies a relationship of 1.03D₀ ≦ Dv ≦ 1.10D₀ where Dv is a diameter of the base part (28) of the valve body (2) and D₀ is a seat diameter of the valve seat (4).

## Patentansprüche

1. Dampfventil, umfassend:
einen Ventilsitz (4) und
einen Ventilkörper (2), der sich derart bezüglich des Ventilsitzes (4) bewegt, dass er einen Bereich eines Stromwegs zwischen dem Ventilsitz (4) und dem Ventilkörper (2) ändert und einen Strom eines Dampfs, der durch den Stromweg läuft, reguliert,
wobei der Ventilkörper umfasst:
einen Ventilkopfabschnitt (2A), der mit dem Ventilsitz (4) in Kontakt kommt und eine Beziehung von r > 0,6 D₀ erfüllt, wobei r ein Krümmungsradius des Ventilkopfabschnitts (2A) ist und D₀ ein Sitzdurchmesser des Ventilsitzes (4) ist, **dadurch gekennzeichnet, dass** das Ventil ferner einen konisch zulaufenden Abschnitt (2B) umfasst, der auf einer stromaufwärtigen Seite des Ventilkopfabschnitts (2A) angeordnet ist, und dessen Oberfläche mehr in einer Richtung relativer Bewegung des Ventilkörpers (2) zum Ventilsitz (4) hin geneigt ist als jene des Ventilkopfabschnitts (2A).

2. Dampfventil nach Anspruch 1,
wobei der Ventilkopfabschnitt (2A) eine Beziehung von 0,61 D₀ ≤ r ≤ 0,80 D₀ erfüllt.

3. Dampfventil nach einem der Ansprüche 1 oder 2,
wobei die Oberfläche des konisch zulaufenden Abschnitts (2B) einen Winkel θ₀ bezüglich einer Tangenslinie (20) des Ventilsitzes (4), die von einer Sitzposition (3) zu einer stromabwärtigen Seite hin verläuft, bildet, wobei der Winkel θ₀ nicht kleiner als 150º und nicht größer als 170º ist.

4. Dampfventil nach einem der Ansprüche 1 bis 3,
wobei der konisch zulaufende Abschnitt (2B) eine Beziehung von 0,3 ≤ θ / (90 - δ) ≤ 0,4 erfüllt, wobei θ ein Winkel ist, der durch die Oberfläche des konisch zulaufenden Abschnitts (2B) bezüglich der Richtung relativer Bewegung des Ventilkörpers (2) zum Ventilsitz (4) gebildet ist, und δ ein Winkel ist, der durch eine Tangenslinie (20) des Ventilsitzes (4) an einer Sitzposition (3) bezüglich der Richtung relativer Bewegung des Ventilkörpers (2) zum Ventilsitz (4) gebildet ist.

5. Dampfventil nach einem der Ansprüche 1 bis 4,
wobei der Ventilkopfabschnitt (2A) des Ventilkörpers (2) eine kreisförmige Aussparung (26) aufweist, die an einer Spitze des Ventilkörpers (2) auf einer stromabwärtigen Seite einer Sitzposition (3) ausgebildet ist, wo der Ventilkopfabschnitt (2A) mit dem Ventilsitz (4) in Kontakt kommt, und
wobei die kreisförmige Aussparung (26) eine Beziehung von 0,90 D₀ ≤ Dn ≤ 0,98 D₀ erfüllt, wobei Dn ein Durchmesser der kreisförmigen Aussparung (26) ist und D₀ ein Sitzdurchmesser des Ventilsitzes (4) ist.

6. Dampfventil nach einem der Ansprüche 1 bis 5,
wobei der Ventilkörper (2) ferner umfasst:
ein Basisteil (28), das auf einer stromaufwärtigen Seite des konisch zulaufenden Abschnitts (2B) angeordnet ist und zylindrisch ausgebildet ist, und
wobei das Basisteil (28) eine Beziehung von 1,03 D₀ ≤ Dv ≤ 1,10 D₀ erfüllt, wobei Dv ein Durchmesser des Basisteils (28) des Ventilkörpers (2) ist und D₀ ein Sitzdurchmesser des Ventilsitzes (4) ist.

## Revendications

1. Soupape de vapeur comportant :
un siège de soupape (4) ; et
un corps de soupape (2) qui se déplace par rapport au siège de soupape (4) de façon à changer une section d'un passage d'écoulement entre le siège de soupape (4) et le corps de soupape (2) et réguler un écoulement de vapeur passant à travers le passage d'écoulement,
dans laquelle le corps de soupape comporte :
une partie de tête de soupape (2A) qui vient en contact avec le siège de soupape (4) et satisfait la relation r > 0,6 D₀, où r est un rayon de courbure de la partie de tête de soupape (2A) et D₀ est un diamètre de siège du siège de soupape (4) ; **caractérisée en ce que** la soupape comporte en outre
une partie conique (2B) qui est disposée sur un côté amont de la partie de tête de soupape (2A) et dont la surface est inclinée davantage vers une direction de mouvement relatif du corps de soupape (2) par rapport au siège de soupape (4) que celle de la partie de tête de soupape (2A).

2. Soupape de vapeur selon la revendication 1, dans laquelle la partie de tête de soupape (2A) satisfait la relation 0,61 D₀ ≤ r ≤ 0,80 D₀.

3. Soupape de vapeur selon la revendication 1 ou 2, dans laquelle la surface de la partie conique (2B) forme un angle de θ₀ par rapport à une ligne tangentielle (20) du siège de soupape (4) s'étendant depuis une position d'appui (3) vers un côté en aval, l'angle θ₀ étant pas inférieur à 150° ni supérieur à 170°.

4. Soupape de vapeur selon l'une quelconque des revendications 1 à 3, dans laquelle la partie conique (2B) satisfait la relation 0,3 ≤ θ / (90 - δ) ≤ 0,4 où θ est un angle formé par la surface de la partie conique (2B) par rapport à la direction du mouvement relatif du corps de soupape (2) par rapport au siège de soupape (4) et δ est un angle formé par une ligne tangentielle (20) du siège de soupape (4) dans une position d'appui (3) par rapport à la direction du mouvement relatif du corps de soupape (2) par rapport au siège de soupape (4).

5. Soupape de vapeur selon l'une quelconque des revendications 1 à 4, dans laquelle la partie de tête de soupape (2A) du corps de soupape (2) a un renfoncement circulaire (26) formé à une extrémité du corps de soupape (2) sur un côté aval d'une position d'appui (3) où la partie de tête de soupape (2A) vient en contact avec le siège de soupape (4), et
dans laquelle le renfoncement circulaire (26) satisfait la relation 0,90 D₀ ≤ Dn ≤ 0,98 D₀ où Dn est un diamètre du renfoncement circulaire (26) et D₀ est un diamètre de siège du siège de soupape (4).

6. Soupape de vapeur selon l'une quelconque des revendications 1 à 5, dans laquelle le corps de soupape (2) comporte en outre :
une partie de base (28) qui est disposée sur un côté amont de la partie conique (2B) et est formée de manière cylindrique, et
dans laquelle la partie de base (28) satisfait la relation 1,03 D₀ ≤ Dv ≤ 1,10 D₀ où Dv est un diamètre de la partie de base (28) du corps de soupape (2) et D₀ est un diamètre de siège du siège de soupape (4).
